# EUROPEAN PATENT SPECIFICATION

(11) **EP 3 268 446 B1**
(45) Date of publication and mention of the grant of the patent: **07.11.2018**
(21) Application number: 15708523.4
(22) Date of filing: 09.03.2015
(51) Int. Cl.: C09K 8/32, B01D 17/00, B01F 17/00, C10G 33/00, C09K 8/52, E21B 21/06

(54) **EMULSION-BREAKER FOR OIL BASED MUD INVERT EMULSIONS**
EMULSIONSSPALTER FÜR ÖLBASIERTE SCHLAMMINVERTEMULSIONEN
DÉSÉMULSIFIANT POUR ÉMULSIONS INVERSÉES DE BOUE À BASE D'HUILE

(43) Date of publication of application: 17.01.2018
(73) Proprietor: Emery Oleochemicals GmbH, 40599 Düsseldorf (DE)
(72) Inventor: MAEKER, Diana, 40822 Mettmann (DE); MUELLER, Heinz, 40789 Monheim (DE)
(74) Representative: Kinkeldey, Daniela
(86) International application number: PCT/EP2015/054863
(87) International publication number: WO 2016/141968

(56) References cited:
- EP-A1- 1 452 580
- WO-A1-2014/015911
- US-A- 2 353 697
- US-A- 2 366 498
- US-A- 5 401 439
- SU J ET AL: "Synergistic effects of polyglycerol ester of polyricinoleic acid and sodium caseinate on the stabilisation of water-oil-water emulsions", FOOD HYDROCOLLOIDS, ELSEVIER BV, NL, vol. 20, no. 2-3, 1 March 2006 (2006-03-01), pages 261-268, XP028011756, ISSN: 0268-005X, DOI: 10.1016/J.FOODHYD.2004.03.010 [retrieved on 2006-03-01]

## Description

The present invention relates to a composition comprising (a) a C1-C10 alcohol and/or an alkoxylated C1-C10 alcohol and (b) an oil based mud thinner. The invention further relates to a use of said composition or of a C1-C10 alcohol and/or an alkoxylated C1-C10 alcohol as demulsifier preferably as demulsifier in an oil based drilling fluid.

### Background of the Invention

Drilling fluids generally contain certain additives. Such additives can for example be a viscosifier, a suspending agent, a dispersant, a thinner, an anti-balling additive, a lubricant, a wetting agent, a seepage control additive, a drilling enhancer, a penetration rate enhancer, a corrosion inhibitor, an acid, a base, a gelling agent and buffers.

Drilling fluids can be used in both oilfield applications and also in other industrial settings. During the drilling of oil and/or gas wells, a drill bit at the end of a rotating drill string, or at the end of a drill motor, is used to penetrate through geologic formations. During this operation, drilling mud is typically circulated through the drill string, out of the bit, and returned to the surface via the annular space between the drill pipe and the formation. Drilling mud serves numerous functions, including cooling and lubricating the drill string and drill bit, counterbalancing the pressures encountered in the formation using hydrostatic pressure, providing a washing action to remove the formation cuttings from the wellbore, and forming a friction reducing wall cake between the drill string and the wellbore.

In oilfield drilling applications there are also drilling mud/ fluid systems in use which are so called low solid/ or solid free systems. They are generally formulated with a high content of high density brine to create sufficient mud density also in the absence of large amounts of solids.

Different types of salts can be added to sufficiently increase the weight of low solid or solid free drilling systems. Some salts that may be added including CsCl and CsCOOH are relatively expensive.

For environmental but also economic reasons it can be of interest in recovering these salts from the drilling mud before disposal of the drilling mud.

Thus, there is a general need in the art for novel, effective and environmentally friendly methods for the recovery and recycling of brine phase from drilling fluids. US 2 366 498 discloses compositions on the basis of organic acids as demulsifiers in the resolution of crude oil emulsions. It is stated, that the hydroxylated acids as ricinoleic acid are preferred and the use of polyricinoleic acid is mentioned in a list of different possibilities.

### Summary of the Invention

The present invention provides in a first aspect a composition comprising
(a) a C1-C10 alcohol and/or
   an alkoxylated C1-C10 alcohol; and
(b) an oil based mud thinner selected from the group consisting of a polymerized hydroxy fatty acid comprising in its polymerized form in total one carboxyl group and at least 36 carbon atoms.

Different drilling mud separation methods are possible. The breaking of emulsions that are present in the drilling mud is one method according to the invention for separating the oil from the aqueous brine and, thus, for retrieving the salt components.

As shown in the examples, the demulsifier of the invention is effective because relatively little material is required to achieve phase separation. Furthermore, the demulsifier of the invention is relatively non-toxic to the environment.

Thus, the invention also provides the use of a C1-C10 alcohol and/or an alkoxylated C1-C10 alcohol according to the invention as defined herein or of a composition according to the invention as demulsifier.

In a preferred embodiment of the use according to the invention said C1-C10 alcohol and/or said alkoxylated C1-C10 alcohol and/or said
composition is used as demulsifier in an oil based drilling fluid and preferably in an oil based drilling fluid that comprises less than 10 wt% (preferably less than 5 wt%) of solids based on the total weight of the drilling fluid.

In preferred embodiments of the use of the invention, said C1-C10 alcohol is a C1-C10 primary or secondary alcohol and said alkoxylated C1-C10 alcohol is an alkoxylated C1-C10 primary or secondary alcohol.

### Detailed Description of the Invention

Before the present invention is described in detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. Nothing herein is to be construed as an admission that the invention is not entitled to antedate such disclosure by virtue of prior invention.

Low solid oil-based muds (OBM) are oil-based drilling fluids that typically contain heavy brines (for example caesium chloride or caesium formate brines) to adjust the mud density to an appropriate level. As used herein an "oil based mud thinner" is a thinner suitable for oil based muds. The organic phase of an oil based mud can comprise various non-polar compounds and preferably the organic phase of the oil based mud comprises one or more compound selected from the group consisting of
(i) a carboxylic acid ester of formula: R'-COO-R";
   where R' is a saturated or unsaturated, linear or branched alkyl group containing 5 to 23 carbon atoms and R" is an alkyl group containing 1 to 22 carbon atoms, which may be saturated or unsaturated, linear or branched;
(ii) an α-olefin, an internal olefin, a poly-α-olefin, or combinations thereof;
(iii) a water-insoluble, symmetrical or nonsymmetrical ether of a monohydric alcohols of natural or synthetic origin, which contain 1 to 24 carbon atoms;
(iv) a water-insoluble alcohol of formula: R"'-OH, where R'" is a saturated, unsaturated, linear or branched alkyl group containing 11 to 24 carbon atoms;
(v) a carbonic acid diester;
(vi) a paraffin;
(vii) an acetal; and
(viii) combinations of any of (i) trough (vii).

The salt solutions that are generally used in low solid OBMs can be costly. It was now discovered that specific short-chain alcohols which are at least partially soluble in water such as isopropanol can effectively function as emulsion breaker and can be used to bring about phase separation which allows recovery of the brine from low solid/solid-free OBMs.

This demulsifying effect could unexpectedly even be further enhanced when combining said short-chain alcohols with thinners for oil based muds. Such thinners include, for example, poly ricinoleic acid, alkoxylates of fatty alcohols and hydrophilic ether carboxylic acids.

In preferred embodiments the demulsifiers of the invention can also be used with drilling fluids that are devoid of barium sulfate.
In a first aspect the invention provides a composition comprising
(a) a C1-C10 (i.e. a C1, C2, C3, C4, C5, C6, C7, C8, C9 or C10) alcohol and/or an alkoxylated C1-C10 (i.e. a C1, C2, C3, C4, C5, C6, C7, C8, C9 or C10) alcohol; and
(b) an oil based mud thinner which is a polymerized hydroxy fatty acid comprising in its polymerized form in total one carboxyl group and at least 36 carbon atoms.

In a further preferred embodiment in the composition according to the invention said C1-C10 (i.e. a C1, C2, C3, C4, C5, C6, C7, C8, C9 or C10) alcohol and/or said alkoxylated C1-C10 (i.e. a C1, C2, C3, C4, C5, C6, C7, C8, C9 or C10) alcohol has a solubility in distilled water at 20°C of at least 7 g/l.

In a further preferred embodiment in the composition according to the invention said alcohol is a primary or secondary alcohol and said alkoxylated alcohol is an alkoxylated primary or alkoxylated secondary alcohol and said alcohol and/or said alkoxylated alcohol have a solubility in distilled water at 20°C of at least 7 g/l.

Preferably in the composition according to the invention said alkoxylated C1-C10 (i.e. a C1, C2, C3, C4, C5, C6, C7, C8, C9 or C10) primary alcohol has the following general formula

RO(CH₂CH₂O)ₓ(CH₂CHR¹O)_{y}-H

wherein
R is C1-C10 alkyl (i.e. a C1, C2, C3, C4, C5, C6, C7, C8, C9 or C10 alkyl);
x is an integer number of at least 1;
y is an integer number between 0 and 3 (e.g. 0,1,2 or 3); and
R¹ is an alkyl radical having from 1 to 4 carbon atoms (i.e. 1, 2, 3 or 4 carbon atoms).

In a preferred embodiment y=0 and R is C2-C4 (i.e. C2, C3 or C4) alkyl.

Preferably, component (a) comprised in the composition of the invention is a C2-C4 (i.e. C2, C3 or C4) primary alcohol.

In a further preferred embodiment, said polymerized hydroxy fatty acid is a polymerized saturated or unsaturated C16-C24 (i.e. a C16, C17, C18, C19, C20, C21, C22, C23 or C24) hydroxy fatty acid.

In a further preferred embodiment said polymerized hydroxy fatty acid comprised as component (b) in preferred embodiments of the composition of the invention is a polymerized saturated or unsaturated C18 hydroxy fatty acid.

In a most embodiment, said polymerized hydroxy fatty acid is polymerized ricinoleic acid or polymerized hydroxystearic acid and most preferably polymerized ricinoleic acid.

The composition further comprises an oil based mud. If the composition further comprises an oil based mud it is preferred that said oil based mud comprises one or more compound selected from the group consisting of
(i) a carboxylic acid ester of formula: R'-COO-R";
   where R' is a saturated or unsaturated, linear or branched alkyl group containing 5 to 23 carbon atoms and R" is an alkyl group containing 1 to 22 carbon atoms, which may be saturated or unsaturated, linear or branched;
(ii) an α-olefin, an internal olefin, a poly-α-olefin, or combinations thereof;
(iii) a water-insoluble, symmetrical or nonsymmetrical ether of a monohydric alcohols of natural or synthetic origin, which contain 1 to 24 carbon atoms;
(iv) a water-insoluble alcohol of formula: R"'-OH, where R"' is a saturated, unsaturated, linear or branched alkyl group containing 11 to 24 carbon atoms;
(v) a carbonic acid diester;
(vi) a paraffin;
(vii) an acetal; and
(viii) combinations of any of (i) through (vii).

In a further preferred embodiment the composition of the invention may also comprise a salt selected from the group consisting of a KCl, CsCl, NaCl, CaCl₂, KBr, CaBr₂, CsCOOH, KCOOH or a mixture thereof.

In a further aspect relates to the use of a C1-C10 (i.e. a C1, C2, C3, C4, C5, C6, C7, C8, C9 or C10) alcohol and/or an alkoxylated C1-C10 (i.e. a C1, C2, C3, C4, C5, C6, C7, C8, C9 or C10) alcohol according to the invention as defined herein or of a composition according to the invention as demulsifier.

Further preferred is the use according to the invention, wherein said optionally alkoxylated alcohol and/or said composition is used as demulsifier in an oil-based drilling fluid.

In a further preferred embodiment of the use of the invention the oil based drilling fluid comprises not more than 45 wt% of water based on the total weight of the drilling fluid.

Further preferred is the use according to the invention, wherein the oil based drilling fluid comprises less than 10 wt% of solids based on the total weight of the drilling fluid.

Further preferred is the use according to the invention, wherein the oil based drilling fluid comprises less than 8 wt% of solids based on the total weight of the drilling fluid.

Further preferred is the use according to the invention, wherein the oil based drilling fluid comprises less than 6 wt% of solids based on the total weight of the drilling fluid.

Further preferred is the use according to the invention, wherein the oil based drilling fluid comprises less than 5 wt% of solids based on the total weight of the drilling fluid.

Further preferred is the use according to the invention, wherein the oil based drilling fluid comprises less than 4 wt% of solids based on the total weight of the drilling fluid.

Further preferred is the use according to the invention, wherein the oil based drilling fluid comprises less than 3 wt% of solids based on the total weight of the drilling fluid.

Further preferred is the use according to the invention, wherein the oil based drilling fluid comprises less than 2 wt% of solids based on the total weight of the drilling fluid.

Further preferred is the use according to the invention, wherein the oil based drilling fluid comprises less than 1 wt% of solids based on the total weight of the drilling fluid.

Further preferred is the use according to the invention, wherein the oil based drilling fluid comprises no solid matter.

Further preferred is the use according to the invention, wherein the oil based drilling fluid comprises an aqueous salt solution. Preferably, said aqueous salt solution comprises a salt selected from the group consisting of a KCl, CsCl, NaCl, CaCl₂, KBr, CaBr₂, CsCOOH, KCOOH or a mixture thereof.

Also preferred is the use according to the invention, wherein said demulsifier is preferably used to break the emulsion of said oil based drilling fluid and to separate said aqueous salt solution from the oil phase of said oil based drilling fluid.

The demulsifiers according to the invention and described herein may also be used to separate saline water (e.g. comprising any of KCl, CsCl, NaCl, CaCl₂, KBr, CaBr₂, CsCOOH, KCOOH or a mixture thereof) from crude oil.

Various modifications and variations of the invention will be apparent to those skilled in the art without departing from the scope of the invention. Although the invention has been described in connection with specific preferred embodiments, it should be understood that the invention as claimed should not be unduly limited to such specific embodiments.

The following examples are merely illustrative of the present invention and should not be construed to limit the scope of the invention as indicated by the appended claims in any way.

### Examples

### Example 1:

30 ml (about 46g) low solid OBM were placed in a 45ml plastic tube and mixed with a demulsifier or demulsifier mixture of the type and amount as specified below. The resulting composition was mixed for one minute by manual shaking of the tube. Thereafter, the tube was allowed to stand overnight (about 16 hours).

It was then recorded whether phase separation occurred or not. The upper phase is the oil phase and the lower the brine (water/salt mixture). After removing solid particles from the two-phase system, a clear aqueous phase could be isolated.

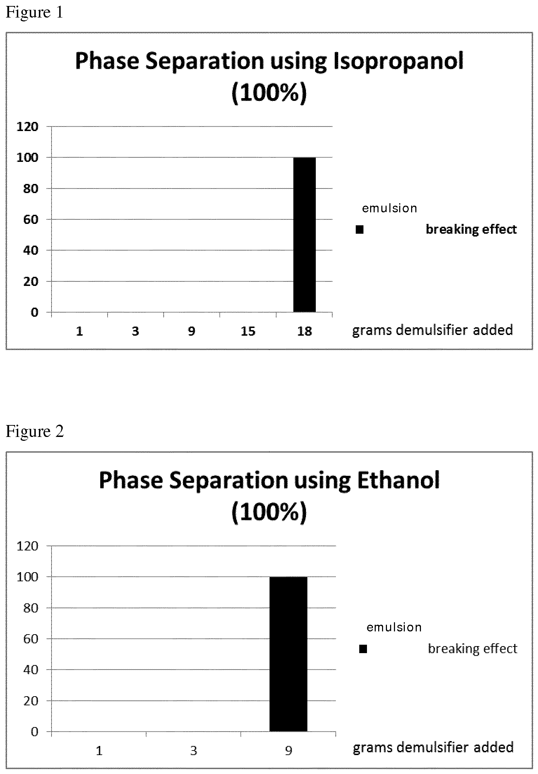

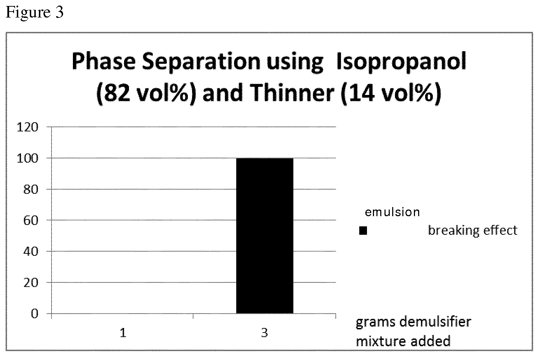

The results are shown in figures 1-3. In figure 1 it is shown that when adding 18 g of isopropanol phase separation is achieved but not when adding 1, 3, 9 or 15 grams of isopropanol. Figure 2 shows that the same effect can be achieved also when using a different alcohol, namely when adding 9 g ethanol. Figure 3 shows that when adding a demulsifying mixture comprising 82 vol% isopropanol and 14 vol% thinner (polymerized ricinoleic acid), phase separation can be achieved already when adding only 3 g of said demulsifying mixture. This shows that the demulsifying effect of the alcohol can be enhanced when adding the thinner.

If phase separation was achieved, the deposited solids can be separated by filtration and the brine solution with the salt can be separated from the oil phase and recovered.

## Claims

1. Composition comprising
(a) a C1-C10 alcohol and/or
an alkoxylated C1-C10 alcohol; and
(b) an oil based mud thinner which is a polymerized hydroxy fatty acid comprising in its polymerized form in total one carboxyl group and at least 36 carbon atoms.

2. Composition according to claim 1, wherein said C1-C10 alcohol and/or said alkoxylated C1-C10 alcohol has a solubility in distilled water at 20°C of at least 7 g/l.

3. Composition according to any of the preceding claims, wherein said alkoxylated C1-C10 alcohol has the following general formula
RO(CH₂CH₂O)ₓ(CH₂CHR¹O)_{y}-H
wherein
R is C1-C10 alkyl;
x is an integer number of at least 1;
y is an integer number between 0 and 3; and
R¹ is an alkyl radical having from 1 to 4 carbon atoms.

4. Composition according to claim 3, wherein y=0 and R is C2-C4 alkyl.

5. Composition according to any of the preceding claims, wherein component (a) is a C2-C4 primary alcohol.

6. Composition according to any of the preceding claims, wherein said polymerized hydroxy fatty acid is a polymerized saturated or unsaturated C16-C24 hydroxy fatty acid.

7. Composition according to any of the preceding claims, wherein said polymerized hydroxy fatty acid is a polymerized saturated or unsaturated C18 hydroxy fatty acid.

8. Composition according to claim 6 or 7, wherein said polymerized hydroxy fatty acid is polymerized ricinoleic acid or polymerized hydroxystearic acid.

9. Use of a composition according to any of the preceding claims as demulsifier.

10. Use according to claim 9, wherein said composition is used as demulsifier in an oil based drilling fluid.

11. Use according to claim 10, wherein the oil based drilling fluid comprises not more than 45 wt% of water based on the total weight of the drilling fluid.

12. Use according to any of claims 10-11, wherein the oil based drilling fluid comprises less than 10 wt% of solids based on the total weight of the drilling fluid.

13. Use according to any of claims 10-12, wherein the oil based drilling fluid comprises an aqueous salt solution.

14. Use according to claim 13, wherein the aqueous salt solution comprises a salt selected from the group consisting of a KCl, CsCl , NaCl, CaCl₂, KBr, CaBr₂, CsCOOH and KCOOH or a mixture thereof.

15. Use according to any of claims 13-14, wherein said demulsifier is used to break the emulsion of said oil based drilling fluid and to separate said aqueous salt solution from the oil phase of said oil based drilling fluid.

## Patentansprüche

1. Zusammensetzung umfassend
(a) einen C1-C10-Alkohol; und/oder einen alkoxylierten C1-C10-Alkohol; und
(b) ein Schlammverdünnungsmittel auf Ölbasis, das eine polymerisierte Hydroxyfettsäure ist, die in ihrer polymerisierten Form insgesamt eine Carboxylgruppe und mindestens 36 Kohlenstoffatome umfasst.

2. Zusammensetzung nach Anspruch 1, wobei der C1-C10-Alkohol und/oder der alkoxylierte C1-C10-Alkohol eine Löslichkeit in destilliertem Wasser bei 20 °C von mindestens 7 g/l aufweist.

3. Zusammensetzung nach irgendeinem der vorhergehenden Ansprüche, wobei der alkoxylierte C1-C10-Alkohol die folgende allgemeine Formel aufweist
RO(CH₂CH₂O)ₓ(CH₂CHR¹O)_{y}-H
wobei
R C1-C10-Alkyl ist;
x eine ganze Zahl von mindestens 1 ist;
y eine ganze Zahl zwischen 0 und 3 ist; und
R¹ ein Alkylradikal ist, das 1 bis 4 Kohlenstoffatome aufweist.

4. Zusammensetzung nach Anspruch 3, wobei y=0 und R C2-C4-Alkyl ist.

5. Zusammensetzung nach irgendeinem der vorhergehenden Ansprüche, wobei die Komponente (a) ein primärer C2-C4-Alkohol ist.

6. Zusammensetzung nach irgendeinem der vorhergehenden Ansprüche, wobei die polymerisierte Hydroxyfettsäure eine polymerisierte gesättigte oder ungesättigte C16-C24-Hydroxyfettsäure ist.

7. Zusammensetzung nach irgendeinem der vorhergehenden Ansprüche, wobei die polymerisierte Hydroxyfettsäure eine polymerisierte gesättigte oder ungesättigte C18-Hydroxyfettsäure ist.

8. Zusammensetzung nach Anspruch 6 oder 7, wobei die polymerisierte Hydroxyfettsäure eine polymerisierte Ricinolsäure oder eine polymerisierte Hydroxystearinsäure ist.

9. Verwendung einer Zusammensetzung nach irgendeinem der vorhergehenden Ansprüche als Demulgator.

10. Verwendung nach Anspruch 9, wobei die Zusammensetzung als Demulgator in einem Bohrfluid auf Ölbasis verwendet wird.

11. Verwendung nach Anspruch 10, wobei das Bohrfluid auf Ölbasis nicht mehr als 45 Gew.-% Wasser, auf das Gesamtgewicht des Bohrfluid bezogen, umfasst.

12. Verwendung nach irgendeinem der Ansprüche 10-11, wobei das Bohrfluid auf Ölbasis weniger als 10 Gew.-% Feststoffe, auf das Gesamtgewicht des Bohrfluids bezogen, umfasst.

13. Verwendung nach irgendeinem der Ansprüche 10-12, wobei das Bohrfluid auf Ölbasis eine wässrige Salzlösung umfasst.

14. Verwendung nach Anspruch 13, wobei die wässrige Salzlösung ein Salz umfasst ausgewählt aus der Gruppe bestehend aus KCl, CsCl, NaCl, CaCl₂, KBr, CaBr₂, CsCOOH und KCOOH oder einer Mischung davon.

15. Verwendung nach irgendeinem der Ansprüche 13-14, wobei der Demulgator zum Spalten der Emulsion des Bohrfluids auf Ölbasis und zum Trennen der wässrigen Salzlösung von der Ölphase des Bohrfluid auf Ölbasis verwendet wird.

## Revendications

1. Composition comprenant
(a) un alcool en C1-C10 et/ou
un alcool en C1-C10 alkoxylé ; et
(b) un diluant pour boue à base d'huile qui est un hydroxyacide gras polymérisé comprenant au total, sous sa forme polymérisée, un groupement carboxyle et au moins 36 atomes de carbone.

2. Composition selon la revendication 1, où ledit alcool en C1-C10 et/ou ledit alcool en C1-C10 alkoxylé présente une solubilité dans l'eau distillée à 20 °C d'au moins 7 g/l.

3. Composition selon l'une quelconque des revendications précédentes, où ledit alcool en C1-C10 alkoxylé présente la formule générale suivante
RO(CH₂CH₂O)ₓ(CH₂CHR¹O)_{y}-H
où
R représente un groupement alkyle en C1-C10 ;
x représente un nombre entier égal à au moins 1 ;
y représente un nombre entier compris entre 0 et 3 ; et
R¹ représente un radical alkyle comportant entre 1 et 4 atomes de carbone.

4. Composition selon la revendication 3, où y = 0 et R représente un groupement alkyle en C2-C4.

5. Composition selon l'une quelconque des revendications précédentes, où le composant (a) est un alcool primaire en C2-C4.

6. Composition selon l'une quelconque des revendications précédentes, où ledit hydroxyacide gras polymérisé est un hydroxyacide gras polymérisé en C16-C24 saturé ou insaturé.

7. Composition selon l'une quelconque des revendications précédentes, où ledit hydroxyacide gras polymérisé est un hydroxyacide gras polymérisé en C18 saturé ou insaturé.

8. Composition selon la revendication 6 ou 7, où ledit hydroxyacide gras polymérisé est l'acide ricinoléique polymérisé ou l'acide hydroxystéarique polymérisé.

9. Utilisation d'une composition selon l'une quelconque des revendications précédentes en tant que désémulsifiant.

10. Utilisation selon la revendication 9, où ladite composition est utilisée en tant que désémulsifiant dans un fluide de forage à base d'huile.

11. Utilisation selon la revendication 10, où le fluide de forage à base d'huile ne comprend pas plus de 45 % en masse d'eau par rapport à la masse totale du fluide de forage.

12. Utilisation selon l'une quelconque des revendications 10 et 11, où le fluide de forage à base d'huile comprend moins de 10 % en masse de solides par rapport à la masse totale du fluide de forage.

13. Utilisation selon l'une quelconque des revendications 10 à 12, où le fluide de forage à base d'huile comprend une solution saline aqueuse.

14. Utilisation selon la revendication 13, où la solution saline aqueuse comprend un sel choisi dans le groupe constitué par KCl, CsCl, NaCl, CaCl₂, KBr, CaBr₂, CsCOOH et KCOOH ou l'un de leurs mélanges.

15. Utilisation selon l'une quelconque des revendications 13 et 14, où ledit désémulsifiant est utilisé pour casser l'émulsion dudit fluide de forage à base d'huile et pour séparer ladite solution saline aqueuse de la phase huileuse dudit fluide de forage à base d'huile.
